(19) Europäisches Patentamt
European Patent Office
Office européen des brevets

(11) **EP 4 768 509 A1**

(12) **EUROPEAN PATENT APPLICATION**
published in accordance with Art. 153(4) EPC

(43) Date of publication:
01.07.2026 Bulletin 2026/27

(21) Application number: 24889090.7

(22) Date of filing: 05.11.2024

(51) International Patent Classification (IPC):
*C08F 36/04* (2006.01)   *C08F 136/06* (2006.01)
*C08F 2/22* (2006.01)   *C08F 6/18* (2006.01)
*C08F 2/38* (2006.01)

(52) Cooperative Patent Classification (CPC):
C08F 2/22; C08F 2/38; C08F 6/18; C08F 36/04;
C08F 136/06

(86) International application number:
PCT/KR2024/017303

(87) International publication number:
WO 2025/100902 (15.05.2025 Gazette 2025/20)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 06.11.2023 KR 20230151818
06.11.2023 KR 20230151819

(71) Applicant: LG Chem, Ltd.
Yeongdeungpo-gu
Seoul 07336 (KR)

(72) Inventors:
• SUK, Jaemin
Seoul 07796 (KR)
• LEE, Jin Hyoung
Seoul 07796 (KR)
• KIM, Ki Hyun
Seoul 07796 (KR)
• BAK, Changhong
Seoul 07796 (KR)
• CHAE, Minsu
Seoul 07796 (KR)
• JEONG, Young Hwan
Seoul 07796 (KR)

(74) Representative: Vossius & Partner
Patentanwälte Rechtsanwälte mbB
Siebertstraße 3
81675 München (DE)

(54) **DIENE-BASED RUBBERY POLYMER AND PREPARATION METHOD THEREFOR**

(57) The present invention relates to a diene-based rubber polymer and a method of preparing the same. According to the present invention, the present invention has an effect of providing excellent physical property balance between impact resistance and fluidity and excellent impact resistance and processability by controlling the microstructure, average particle diameter, or total solids content while having a monodisperse particle diameter distribution.

[FIG. 1]

EP 4 768 509 A1

**Description**

[Technical Field]

[Cross-Reference to Related Applications]

This application claims priority to Korean Patent Application No. 10-2023-0151819, filed on November 06, 2023, and Korean Patent Application No. 10-2023-0151818, filed on November 06, 2023, and Korean Patent Application No. 10-2024-0155118, re-filed on November 05, 2024, and Korean Patent Application No. 10-2024-0155119, re-filed on November 05, 2024, based on the priority of the above patents, respectively, in the Korean Intellectual Property Office, the disclosures of each of which are incorporated herein by reference.

The present invention relates to a diene-based rubber polymer and a method of preparing the same. According to the present invention, the present invention may provide excellent physical property balance between impact resistance and fluidity by controlling the particle diameter distribution, average particle diameter, and circularity of a diene-based rubber polymer having a predetermined microstructure.

[Background Art]

A diene-based rubber polymer is used in the preparation of a vinyl cyanide compound-diene-based rubber-aromatic vinyl graft copolymer represented by an acrylonitrile-butadiene rubber-styrene resin.

Since the diene-based rubber polymer is prepared by using a radical initiator, it is difficult to artificially control the microstructure and cross-linking structure in the polymer. For example, the microstructure may include 1,4-cis bonds, 1,4-trans bonds, and 1,2-vinyl bonds.

However, since the diene-based rubber polymer contains such uncontrolled microstructures and cross-linking structures, the impact resistance and fluidity of the graft copolymer and thermoplastic resin composition including the diene-based rubber polymer are reduced.

Therefore, to solve these problems, it is necessary to develop a diene-based rubber polymer capable of providing excellent physical property balance between impact resistance and fluidity.

[Patent Documents]

Japanese Patent Application Publication No. hei 11-130825

[Disclosure]

[Technical Problem]

Therefore, the present invention has been made in view of the above problems, and it is one object of the present invention to provide a diene-based rubber polymer capable of providing excellent physical property balance between impact resistance and fluidity and excellent impact resistance by controlling the microstructure, capillary hydrodynamic fractionation particle diameter distribution, average particle diameter, and circularity thereof, and a method of preparing the diene-based rubber polymer.

The purpose and other purposes of the present invention can all be achieved by the present invention described below.

[Technical Solution]

I) In accordance with one aspect of the present invention, provided is a diene-based rubber polymer including a microstructure containing 20 to 35 % of a cis-1,4-bond, 55 to 65 % of a trans-1,4-bond, and a remaining amount of a 1,2-bond, having a particle diameter distribution section of 1,200 Å to 3,000 Å, having an average particle diameter of 2,500 to 5,000 Å as measured for an acid-thickened product of diene-based rubber polymer latex, and having a circularity of 1.03 to 1.5 as calculated by Equation 1 below.

[Equation 1]

$$\text{Circularity} = \frac{1}{50} \sum_{i=1}^{50} D_i$$

wherein $D_i$ is a ratio [Major axis length/Minor axis length] of a length of a major axis to a length of a minor axis in an i-th particle in latex.

II) According to I), the diene-based rubber polymer may have an average particle diameter of 800 to 3,000 Å as measured for latex of the diene-based rubber polymer.

III) According to I) to II), the diene-based rubber polymer may have a swelling degree of 5 to 20.

IV) In accordance with another aspect of the present invention, provided is a diene-based rubber polymer including a microstructure containing 20 to 35 % of a cis-1,4-bond, 55 to 65 % of a trans-1,4-bond, and a remaining amount of a 1,2-bond,

> having a particle diameter distribution section of 1,200 Å to 3,000 Å,
> having an average particle diameter of 2,500 to 5,000 Å as measured for an acid-thickened product of diene-based rubber polymer latex, and having an average particle diameter of 800 to 3,000 Å as measured for latex of the diene-based rubber polymer.

V) In accordance with still another aspect of the present invention, provided is a method of preparing a diene-based rubber polymer, the method including thickening a diene-based rubber polymer latex using an acid thickening agent and an acid thickening aid to obtain a diene-based rubber polymer, wherein the acid thickening agent and the acid thickening aid are added simultaneously or sequentially.

VI) According to V), the diene-based rubber polymer latex may be prepared by emulsion-polymerizing a conjugated diene compound.

VII) According to V) to VI), as the acid thickening agent, one or more selected from the group consisting of acetic acid, acetic anhydride, dicarboxylic acid, formic acid, citric acid, phosphoric acid, dihydrophosphoric acid, hydrophosphoric acid, sulfuric acid, and hydrosulfuric acid may be used.

VIII) According to V) to VII), the acid thickening aid may be a sulfur-containing compound.

IX) According to V) to VIII), the acid thickening agent and the acid thickening aid may be included in a weight ratio of 1:0.1 to 1:10.

X) According to V) to IX), based on 100 parts by weight (based on solids) of the diene-based rubber polymer latex, the acid thickening agent may be used in an amount of 0.01 to 1.5 parts by weight.

XI) According to V) to X), based on 100 parts by weight (based on solids) of the diene-based rubber polymer latex, the acid thickening aid may be used in an amount of 0.1 to 5 parts by weight.

XII) According to V) to XI), in the sequential addition, the acid thickening aid may be added, and then the acid thickening agent may be added.

XIII) In accordance with still another aspect of the present invention, provided is a graft copolymer including the diene-based rubber polymer described above.

XIV) according to XIII), the diene-based rubber polymer may be included in the graft copolymer in an amount of 3 to 80 % by weight.

XV) According to XIII) to XIV), the graft copolymer may have a swelling degree of 8 to 20.

XVI) In accordance with still another aspect of the present invention, provided is a thermoplastic resin composition including the graft copolymer described above.

XVII) In accordance with yet another aspect of the present invention, provided is a molded article including the thermoplastic resin composition described above.

XVIII) According to XVII), the molded article may be a product requiring impact resistance.

[Advantageous Effects]

According to the present invention, the present invention has an effect of providing a diene-based rubber polymer capable of providing excellent physical property balance between impact resistance and fluidity and excellent impact resistance by controlling the microstructure, particle diameter distribution, and circularity thereof, a method of preparing the diene-based rubber polymer, and a molded article including the diene-based rubber polymer.

[Description of Drawings]

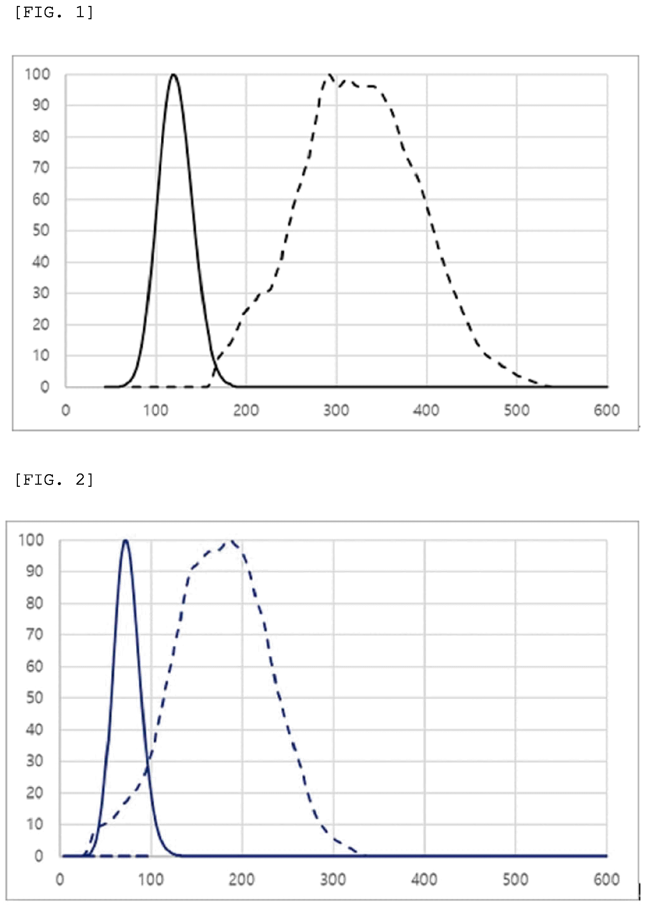

FIG. 1 is a drawing showing the molecular weight distribution of a diene-based rubber polymer according to Example 1 before acid-thickening treatment (solid line) and the molecular weight distribution of a diene-based rubber polymer according to Example 1 after acid-thickening treatment (dotted line).

FIG. 2 is a drawing showing the molecular weight distribution of a diene-based rubber polymer according to Comparative Example 1 before acid-thickening treatment (solid line) and the molecular weight distribution of a diene-based rubber polymer according to Comparative Example 1 after acid-thickening treatment (dotted line).

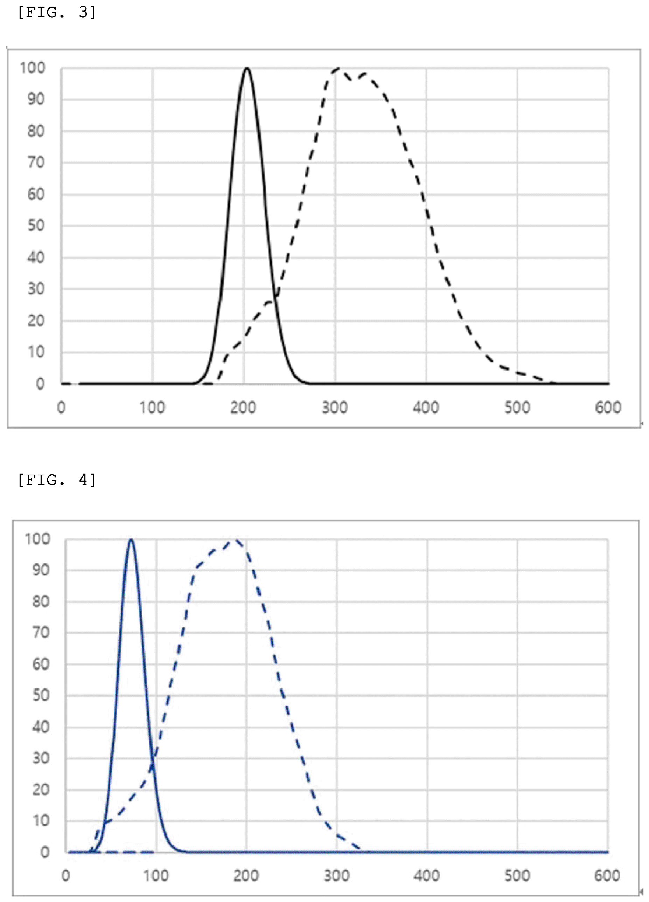

FIG. 3 is a drawing showing the molecular weight distribution of a diene-based rubber polymer according to Example 2 before acid-thickening treatment (solid line) and the molecular weight distribution of a diene-based rubber polymer according to Example 2 after acid-thickening treatment (dotted line).

FIG. 4 is a drawing showing the molecular weight distribution of a diene-based rubber polymer according to Comparative Example 3 before acid-thickening treatment (solid line) and the molecular weight distribution of a diene-based rubber polymer according to Comparative Example 3 after acid-thickening treatment (dotted line).

[Best Mode]

Hereinafter, the present invention is described in more detail to help understand the present invention. However, the present invention is not limited to the embodiments below.

In the present disclosure, a "diene-based rubber polymer" refers to a diene-based rubber polymer latex before crosslinking by adding a crosslinking agent, an acid-thickened product thereof, or a dehydrated and/or dried product thereof.

In the present disclosure, "diene-based rubber polymer latex" refers to a form dispersed in water in a colloidal state polymerized using a conjugated diene compound.

In the present disclosure, "capillary hydrodynamic fractionation (CHDF) particle diameter distribution" may be a particle diameter half-width measured using CHDF 4000 equipment (product name).

The particle diameter half-width refers to the difference between particle diameters that correspond to half of the maximum particle diameter in a particle diameter distribution. As the difference, i.e., particle diameter half-width, increases, the uniformity of rubber particle diameters increases. As a specific example, when fmax is the maximum particle diameter, half of the maximum particle diameter is fmax/2, and the range of particle diameters at two points corresponding to this is the particle diameter half-width. As the difference, i.e., particle diameter half-width, increases, the rubber particle diameter distribution widens.

In the present disclosure, a "mixture distribution (also called monodisperse)" refers to a form that is composed of the sum of two or more simple distributions, but which appears as a continuous line. For reference, when including a diene-based rubber polymer of a mixture distribution, the diene-based rubber polymer may directly affect the impact strength of a graft copolymer and indirectly affect the fluidity of the graft copolymer, and may directly affect the physical properties of the impact strength of a thermoplastic resin composition including the graft copolymer and indirectly affect physical properties such as fluidity.

In the present disclosure, "alkyl" refers to an alkyl group having 1 to 4 carbon atoms, unless otherwise specified.

The present inventors confirmed that, when, in the step prior to preparing the graft copolymer, especially during and/or before acid-thickening treatment, when the microstructure of a diene-based rubber polymer was artificially controlled while controlling the monodisperse particle diameter distribution and circularity within a predetermined range, excellent physical property balance between impact resistance and fluidity and excellent impact resistance could be provided. Based on these results, the present inventors conducted further studies to complete the present invention.

The diene-based rubber polymer of the present invention includes 20 to 35 % of a cis-1,4-bond, 55 to 65 % of a trans-1,4-bond, and a remaining amount of a 1,2-bond, and has a first average particle diameter of 2,500 to 5,000 Å. Here, the first average particle diameter is a measurement value of an acid-thickened product of diene-based rubber polymer latex. When subjected to capillary hydrodynamic fractionation, the diene-based rubber polymer has a monodisperse particle diameter distribution including one or more peaks within a particle diameter distribution section of 1,200 Å to 3,000 Å and has a circularity satisfying a predetermined range. In this case, excellent physical property balance between impact resistance and fluidity and excellent impact resistance may be provided, and thus the diene-based rubber polymer may be applicable to products requiring impact resistance.

Hereinafter, the diene-based rubber polymer is described in detail.

Diene-based rubber polymer

The diene-based rubber polymer of the present invention may include 20 to 35 % of a cis-1,4-bond, 55 to 65 % of a trans-1,4-bond, and a remaining amount of a 1,2-bond.

The diene-based rubber polymer may be polybutadiene rubber, styrene-butadiene rubber, a styrene-butadienestyrene block copolymer, a styrene-(ethylene-butadiene)-styrene block copolymer, acrylonitrile-butadiene rubber, acrylonitrile-styrene-butadiene rubber, or methyl methacrylate-butadiene rubber, preferably polybutadiene rubber, styrene-butadiene rubber, or acrylonitrile-butadiene rubber, more preferably polybutadiene rubber.

The diene-based rubber polymer may preferably be obtained by emulsion polymerization of a conjugated diene compound followed by acid thickening.

In the present disclosure, for example, the conjugated diene compound may include one or more selected from the group consisting of 1,3-butadiene, 2,3-dimethyl-1,3-butadiene, 2-ethyl-1,3-butadiene, 1,3-pentadiene, and isoprene, preferably 1,3-butadiene.

The acid-thickening treatment may be preferably performing thickening using an acid thickening agent and an acid thickening aid.

For example, as the acid thickening agent, one or more selected from the group consisting of acetic acid, acetic anhydride, dicarboxylic acid, formic acid, citric acid, phosphoric acid, dihydrophosphoric acid, hydrophosphoric acid, sulfuric acid, and hydrosulfuric acid may be used.

As the acid thickening aid, a sulfur-containing compound may be used.

For example, the acid thickening aid may be a sulfone, sulfonic acid, sulfone amide, sulfoxylate, sulfonate, mercaptan, sulfite, sulfate, persulfate, thiophene, thiosulfate, thiol acid salt, peroxydisulfate, sulfur monohydrate, or the like.

As a specific example, the acid thickening aid may be alkyl sulfone, phenyl sulfone, heterocyclic sulfone, sulfonic acid alkyl ester, sulfonic acid phenyl ester, alkyl sulfonamide, phenyl sulfonamide, sulfoxylate, alkyl sulfonate, phenyl sulfonate, alkyl mercaptan, phenyl mercaptan, alkyl sulfite, phenyl sulfite, sulfite salt (e.g., calcium sulfate, potassium sulfate), inorganic sulfate (not overlapping with sulfate salt), persulfate, metal sulfide, alkyl hydrogen sulfide, phenyl hydrogen sulfide, alkyl thiophene, phenyl thiophene, thiosulfate, poly thiol acid salt, peroxydisulfate, halogenated sulfur salt, or the like.

For example, the acid thickening agent and the acid thickening aid may be used in a weight ratio of 1:0.1 to 1:10, preferably 1:0.3 to 1:1.2, more preferably 1:0.4 to 1:1.2. In this case, the average particle diameters before and after acid thickening may be controlled within the range of the present invention.

For example, based on 100 parts by weight (based on solids) of the diene-based rubber polymer latex, the acid thickening agent may be used in an amount of 0.01 to 1.5 parts by weight, preferably 0.03 to 1.5 parts by weight, more preferably 0.03 to 1.2 parts by weight. In this case, the average particle diameters before and after acid thickening may be controlled within the range of the present invention.

For example, based on 100 parts by weight (based on solids) of the diene-based rubber polymer latex, the acid thickening aid may be used in an amount of 0.1 to 5 parts by weight, preferably 0.3 to 5 parts by weight, more preferably 0.3 to 2 parts by weight. In this case, the average particle diameters before and after acid thickening may be controlled within the range of the present invention.

For example, the diene-based rubber polymer may have a total solids content (TSC) of 30 to 60 % by weight, preferably 45 to 60 % by weight.

When the total solids content (TSC) is measured, 1.5 g of the prepared diene-based rubber polymer latex is dried for 15 minutes in a hot air dryer set to 150 °C, the weight thereof is measured, and the total solids content (TSC) is calculated by Equation 2 below.

$$\text{Total solids content (\%)} = [\text{Weight after drying/ Weight before drying}] \times 100 \qquad \text{[Equation 2]}$$

In the present disclosure, the cis-1,4-bond, trans-1,4-bond, and 1,2-bond of the diene-based rubber polymer may be collectively called microstructures.

The microstructure represents the result of analysis by 13C 1D Normal NMR, and for example, the microstructure may be a structure measured at the pre-crosslinking step.

The microstructure may also be measured using IR, but since overlapping parts may occur, it is more preferable to measure the microstructure using NMR in terms of precision.

For example, the microstructure may contain 20 to 35 % of a cis-1,4-bond, 55 to 65 % of a trans-1,4-bond, and a remaining amount of a 1,2-bond. In this case, a graft copolymer and thermoplastic resin composition including the diene-based rubber polymer may have excellent physical property balance between impact resistance and fluidity and excellent impact resistance.

As a specific example, the microstructure may contain 20 to 28 % of a cis-1,4-bond, 57 to 63 % of a trans-1,4-bond, and 15 to 23 % by weight of a 1,2-vinyl bond, as a preferred example, 22 to 26 % by weight of a cis-1,4-bond, 59 to 61 % by weight of a trans-1,4-bond, and 15 to 18 % by weight of a 1,2-vinyl bond.

The diene-based rubber polymer may have a monodisperse particle diameter distribution in which a particle diameter distribution measured by capillary hydrodynamic fractionation (CHDF) (hereinafter referred to as 'CHDF particle diameter distribution') exhibits a single particle diameter distribution section.

For example, the monodisperse particle diameter distribution may exhibit a particle diameter distribution section of 1,200 to 3,000 Å. In this case, impact resistance may be excellent.

As a preferred example, the monodisperse particle diameter distribution may exhibit a particle diameter distribution section of 1,500 to 2,500 Å, as a more preferred example, 1,700 to 2,300 Å. In this case, impact resistance may be excellent.

The diene-based rubber polymer may have an average particle diameter of 2,000 to 5,000 Å, preferably 2,500 to 4,600 Å, more preferably 3,000 to 4,500 Å as measured for an acid-thickened product of diene-based rubber polymer latex. Within this range, since the particle diameter half-width increases, impact resistance may be significantly increased, and physical properties such as fluidity may be excellent.

The diene-based rubber polymer may have an average particle diameter of 800 to 3,000 Å, preferably 800 to 1,500 Å, more preferably 900 to 1,450 Å, still more preferably 1,000 to 1,450 Å as measured for latex of the diene-based rubber polymer. In this case, impact resistance may be increased.

The diene-based rubber polymer may have an average particle diameter of 800 to 3,000 Å, preferably 2,000 to 3,000 Å, more preferably 2,200 to 3,000 Å, still more preferably 2,400 to 2,900 Å as measured for latex of the diene-based rubber polymer. In this case, impact resistance may be increased.

In the present disclosure, average particle diameter may be measured by dynamic light scattering, and specifically, may be measured as an intensity value using a Nicomp 380 particle size analyzer (manufacturer: PSS) in a Gaussian mode. As a specific measurement example, a sample is prepared by diluting 0.1 g of latex (TSC: 35 to 50 wt%) 1,000 to 5,000-fold with distilled water, i.e., a sample is diluted appropriately so as not to deviate significantly from an intensity setpoint of 300 kHz, and is placed in a glass tube. Then, the average particle diameter of the sample is measured using a flow cell in auto-dilution in a measurement mode of dynamic light scattering/intensity 300 kHz/intensity-weight Gaussian analysis. At this time, setting values are as follows: temperature: 23 °C; measurement wavelength: 632.8 nm; and channel width: 10 μsec.

There are no particular limitations on the method for controlling the microstructure and swelling degree of the diene-based rubber polymer, and examples thereof include changing the type or content of a polymerization initiator, using a radical catalyst or an alkali metal catalyst, changing polymerization temperature, or changing the type or content of a chain transfer agent.

For example, the swelling degree of the diene-based rubber polymer may be measured as follows.

First, diene-based rubber polymer latex is dropped into a mixture containing an aqueous ethanol solution of a 1:1 volume ratio and 1% by weight of sulfuric acid, based on the aqueous ethanol solution, to obtain solids, which is then completely dried. About 1 g of the obtained solids is immersed in 100 ml of toluene at room temperature for 24 hours in a dark room, and then filtered through a 100 mesh wire mesh to obtain a toluene-insoluble content. After the toluene-insoluble material is completely dried, the swelling degree is calculated by dividing the weight before complete drying by the weight after complete drying.

For example, the diene-based rubber polymer latex may have a swelling degree of 5 to 20, preferably 10 to 20, more preferably 15 to 20. Within this range, excellent impact resistance may be provided.

When particle diameter distribution (hereinafter referred to as 'GPC' particle diameter distribution') is measured by gel permeation chromatography (GPC), the diene-based rubber polymer may have a monodisperse particle diameter distribution.

For example, the monodisperse particle diameter distribution may exhibit a particle diameter distribution section of 1,200 to 3,000 Å, preferably 1,200 to 2,500 Å, more preferably 1,300 to 2,400 Å. Within these ranges, the effect of increasing the impact strength of a graft copolymer may be excellent.

The diene-based rubber polymer may have a circularity of 1.03 to 1.5, preferably 1.05 to 1.3, more preferably 1.05 to 1.1 as calculated by Equation 1 below. In this case, uniform spherical particles may be provided.

[Equation 1]

$$\text{Circularity} = \frac{1}{50} \sum_{i=1}^{50} D_i$$

In Equation 1, $D_i$ is the ratio [Major axis length/Minor axis length] of the length of a major axis to the length of a minor axis in an i-th particle in latex.

The circularity is an indicator of the degree of sphericity of the shape of particles in latex and may also be called spheroidicity. For 50 particles in latex, the length of the major axis passing through the center of the particle and the length of the minor axis passing through the center of the particle and perpendicular to the major axis were measured. The ratio of the length of the major axis to the length of the minor axis in each particle (length of major axis/length of minor axis) is calculated. The circularity is defined as the average ratio of the length of the major axis to the length of the minor axis of each particle. As the above value approaches 1, the length of the major axis and the length of the minor axis of each particle become closer, which may mean that the particles making up the latex are closer to a sphere.

As another example, the diene-based rubber polymer may be a diene-based rubber polymer including 20 to 35 % of a cis-1,4-bond, 55 to 65 % of a trans-1,4-bond, and a remaining amount of a 1,2-bond, and may have a particle diameter distribution section of 1,200 Å to 3,000 Å and a swelling degree of 5 to 20. In this case, a graft copolymer or thermoplastic resin composition including the diene-based rubber polymer may have excellent physical property balance between impact resistance and fluidity.

The diene-based rubber polymer may include a linear structure appearing in the pre-crosslinking step.

For example, the diene-based rubber polymer may be prepared by various methods, and may be prepared according to the methods below.

Method of preparing diene-based rubber polymer (1)

For example, the diene-based rubber polymer according to the present invention may be obtained by emulsion-polymerizing a conjugated diene compound to prepare a diene-based rubber polymer latex and performing acid-thickening treatment of the diene-based rubber polymer latex.

For example, the diene-based rubber polymer latex may be prepared by including a first step of polymerizing 20 to 40 parts by weight of a conjugated diene compound based on 100 parts by weight in total of the conjugated diene compound, 0.1 to 2 parts by weight of an emulsifier, a molecular weight modifier, and an electrolyte; and a second step of adding the residual conjugated diene compound and a molecular weight modifier and performing polymerization to obtain a diene-based rubber polymer latex; .

Method of preparing diene-based rubber polymer (2)

For example, in the step of emulsion-polymerizing a conjugated diene compound, the diene-based rubber polymer according to the present invention may be obtained by adding an acid thickening aid and performing emulsion polymerization to prepare diene-based rubber polymer latex and thickening the diene-based rubber polymer latex using an acid thickening agent.

For example, the diene-based rubber polymer latex may be prepared by including a first step of polymerizing 20 to 40 parts by weight of the conjugated diene compound based on 100 parts by weight in total of the conjugated diene compound, 0.1 to 2 parts by weight of an emulsifier, an acid thickening agent, and a molecular weight modifier; and a second step of adding the remaining conjugated diene compound and a molecular weight modifier and performing a polymerization reaction to obtain a diene-based rubber polymer latex.

In the methods (1) and (2) of preparing a diene-based rubber polymer, when an excess of the conjugated diene compound is added at the beginning of polymerization, the productivity may decrease due to a low charge factor caused by maintaining a high volume due to the low density and boiling point of the conjugated diene compound. An increase in the content of conjugated diene compound in the early stage causes a decrease in the content of conjugated diene compound added later, resulting in a circularity between 1.00 and 1.01. Even after acid coagulation treatment, there is little change in circularity, which may have a negative effect on the impact strength and melting index of the final product.

For example, the emulsifier may be a polymer of an unsaturated fatty acid or a metal salt thereof. In this case, latex stability may be excellent.

For example, based on 100 parts by weight of the conjugated diene compound, the emulsifier may be included in an amount of 0.3 to 1.7 parts by weight, preferably 0.5 to 1.5 parts by weight, more preferably 0.13 to 0.2 parts by weight. Within this range, impact resistance may be excellent, productivity may be increased during injection molding, and appearance quality may be improved.

For example, when an acid thickening aid is added during the emulsion polymerization step, the acid thickening aid may be a sulfur compound.

For example, the acid thickening aid may be sulfone, sulfonic acid, sulfone amide, sulfoxylate, sulfonate, mercaptan, sulfite, sulfate, persulfate, thiophene, thiosulfate, thiol acid salt, peroxydisulfate, halogenated sulfur salt.

As a specific example, the acid thickening aid may be alkyl sulfone, phenyl sulfone, heterocyclic sulfone, sulfonic acid alkyl ester, sulfonic acid phenyl ester, alkyl sulfonamide, phenyl sulfonamide, sulfoxylate, alkyl sulfonate, phenyl sulfonate, alkyl mercaptan, phenyl mercaptan, alkyl sulfite, phenyl sulfite, sulfite salt (e.g., calcium sulfate, potassium sulfate), inorganic sulfate (not overlapping with sulfate salt), persulfate, metal sulfide, alkyl hydrogen sulfide, phenyl hydrogen sulfide, alkyl thiophene, phenyl thiophene, thiosulfate, poly thiol acid salt, peroxydisulfate, halogenated sulfur salt, or the like.

For example, based on 100 parts by weight of the conjugated diene compound, the acid thickening aid may be included in an amount of 0.01 to 1.5 parts by weight, preferably 0.03 to 1.5 parts by weight, more preferably 0.3 to 1.2 parts by weight. Within this range the diene-based rubber polymer latex may be sufficiently thickened.

For example, the molecular weight modifier may be a mercaptan molecular weight modifier, preferably t-dodecyl mercaptan.

For example, based on 100 parts by weight of the conjugated diene compound, the molecular weight modifier may be included in an amount of 0.05 to 0.3 parts by weight, preferably 0.1 to 0.25 parts by weight, more preferably 0.13 to 0.2 parts by weight. Within this range, impact resistance may be improved.

For example, in the first step, the polymerization reaction may be performed at 50 to 60 °C for 50 to 70 minutes, preferably at 53 to 57 °C for 55 to 65 minutes. In this case, the half-width of the particle size of the diene-based rubber polymer may be controlled to significantly increase impact resistance and improve fluidity.

For example, in the first step, the polymerization may be performed by including 0.01 to 0.5 parts by weight of an oxidation-reduction catalyst, 0.01 to 0.7 parts by weight of a fat-soluble polymerization initiator, and 80 to 120 parts by weight of ion-exchange water, preferably 0.05 to 0.3 parts by weight of an oxidation-reduction catalyst, 0.1 to 0.5 parts by weight of a fat-soluble polymerization initiator, and 90 to 110 parts by weight of ion-exchange water. Within this range, since unreacted monomers are reduced, productivity may be increased, and the physical properties of a graft copolymer including the polymer may be improved.

For example, the oxidation-reduction catalyst may include one or more selected from sodium formaldehyde sulfoxylate, sodium ethylenediamine tetraacetate, ferrous sulfate, dextrose, sodium pyrrole phosphate, and sodium sulfite. Within this range, since unreacted monomers are reduced, productivity may be increased, and the physical properties of a graft copolymer including the polymer may be improved.

For example, the fat-soluble polymerization initiator may include one or more selected from alkyl peroxide, aryl peroxide, and azonitrile, specifically one or more selected from cumene hydroperoxide, diisopropyl benzene hydroperoxide, azobis isobutyronitrile, t-butyl hydroperoxide, paramethane hydroperoxide, and benzoylperoxide, preferably t-butyl hydroperoxide.

For example, the electrolyte may include one or more selected from $K_2CO_3$, $Na_2SO_4$, $Na_3PO_4$, $NaH_2PO_4$, and $Na_2HPO_4$, preferably $K_2CO_3$.

For example, based on 100 parts by weight of the conjugated diene compound, the electrolyte may be included in an amount of 0.1 to 0.5 parts by weight, preferably 0.2 to 0.4 parts by weight. Within this range, impact resistance may be excellent, productivity may be increased during injection molding, and appearance quality may be improved.

For example, after the first step, in the second step, preferably, the temperature may be increased to 73 to 83 °C while continuously adding the residual conjugated diene compound and the molecular weight modifier for 9 to 11 hours and the temperature may be maintained for 8 to 10 hours. More preferably, the temperature may be increased to 75 to 80 °C while continuously adding the residual conjugated diene compound and the molecular weight modifier for 9.5 to 10.5 hours and the temperature may be maintained for 8.5 to 9.5 hours. In this case, since the half-maximum width of the particle diameter of the conjugated rubber increases, the impact resistance may be increased and the fluidity may be excellent.

In the present disclosure, "continuous feed" means that components are not fed batchwise.

For example, according to continuous feed, components may be fed for 10 minutes or more, 30 minutes or more, 1 hour or more, preferably 2 hours or more, for example, 12 hours or less, 11 hours or less, 10 hours or less within a polymerization time range in drop by drop, step by step, or continuous flow.

The second step may preferably include step 2-1) of continuously adding the residual conjugated diene compound and the molecular weight modifier for 9 to 11 hours, increasing temperature to 73 to 83 °C, and performing a polymerization reaction while maintaining the temperature for 8 to 10 hours; step 2-2) of adding 0.05 to 0.2 parts by weight of a water-soluble initiator and 0.05 to 0.3 parts by weight of an emulsifier at a polymerization conversion rate of 30 to 40 % by weight and performing a polymerization reaction; and step 2-3) of terminating the polymerization reaction at a polymerization conversion rate of 93 to 99 % by weight.

In the present disclosure, the polymerization conversion rate may be defined as the weight (wt%) of monomers converted to a polymer based on 100 % of the total weight of the monomers introduced until the end of polymerization. A method of measuring polymerization conversion rate performed according to these definitions may be used in the present invention without any special limitations. As a specific example, 1.5 g of a prepared latex is dried in a 150 °C hot air dryer for 15 minutes, the weight thereof is measured, total solids content (TSC) is calculated by Equation 2 below, and the polymerization conversion rate is calculated using the total solids content by Equation 3 below.

Equation 3 is based on the assumption that the total weight of the introduced monomers is 100 parts by weight.

$$\text{Total solids content (\%)} = [\text{Weight after drying/ Weight before drying}] \times 100 \qquad \text{[Equation 2]}$$

$$\text{Polymerization conversion rate (\%)} = [\text{Total solids content} \times (\text{Total weight of a monomer, ion-exchange water, and auxiliary materials added}) / 100] - (\text{Weight of the auxiliary materials added other than the monomer and ion-exchange water}) \qquad \text{[Equation 3]}$$

In Equation 3, the auxiliary materials include an initiator, an emulsifier, an electrolyte, and a molecular weight modifier.

The introduced monomer refers to a conjugated diene compound.

For example, in step 2-2), as the water-soluble initiator, one or more selected from hydrogen peroxide, potassium persulfate, sodium persulfate, and ammonium persulfate may be used.

For example, based on 100 parts by weight of the conjugated diene compound, the water-soluble initiator may be included in an amount of 0.07 to 0.15 parts by weight, preferably 0.09 to 0.13 parts by weight. Within this range, by reducing unreacted monomers, productivity may be increased and physical properties may be improved.

For example, in step 2-2), the emulsifier may be selected from the emulsifiers described in step 1).

For example, based on 100 parts by weight of the conjugated diene compound, the emulsifier of step 2-2) may be included in an amount of 0.1 to 0.25 parts by weight, preferably 0.1 to 0.2 parts by weight. Within this range, by reducing the gel content, impact resistance may be improved and residues may be reduced during injection molding.

For example, the diene-based rubber polymer latex obtained in step 2-3) may have an average particle diameter of 800 to 3,000 Å, preferably 800 to 1,500 Å, more preferably 900 to 1,450 Å, still more preferably 1,000 to 1,450 Å, or 800 to 3,000 Å, preferably 2,000 to 3,000 Å, more preferably 2,200 to 3,000 Å, still more preferably 2,400 to 2,900 Å. Within this range, since the particle diameter half-width of the diene-based rubber polymer latex obtained after acid-thickening treatment to be described increases, impact resistance may be significantly increased, and physical properties such as fluidity may be excellent.

The diene-based rubber polymer latex may have a monodisperse particle diameter distribution, which has an effect of providing the balance between processability and mechanical properties.

For example, the monodisperse particle diameter distribution may be the particle diameter distribution of the diene-based rubber polymer or an acid-thickening treatment product thereof, preferably the particle diameter distribution of an acid-thickening treatment product of the diene-based rubber polymer latex.

For example, when an acid thickening aid was used previously, the acid-thickening treatment may be performed using the acid thickening agent alone. When the acid thickening aid was not used during emulsion polymerization, the acid-thickening treatment may be performed by adding the acid thickening agent and the acid thickening aid simultaneously.

Acids commonly used in thickening treatment of diene-based rubber polymers may be used as the acid thickening agent without special limitations. For example, acetic acid, acetic anhydride, dicarboxylic acid, formic acid, citric acid, phosphoric acid, dihydrophosphoric acid, hydrophosphoric acid, sulfuric acid, hydrosulfuric acid, and the like may be used as the acid thickening agent.

For example, based on 100 parts by weight (based on solids) of the diene-based rubber polymer latex, the acid thickening agent may be included in an amount of 0.1 to 5 parts by weight, preferably 0.3 to 5 parts by weight, more preferably 0.3 to 2 parts by weight.

When an acid thickening aid is added simultaneously to assist the role of the acid thickening agent, the acid thickening aid may be of the same type as the acid thickening aid described above.

For example, based on 100 parts by weight (based on solids) of the diene-based rubber polymer latex, the acid thickening aid added simultaneously with the acid thickening agent may be included in an amount of 0.01 to 0.5 parts by weight, preferably 0.03 to 0.5 parts by weight, more preferably 0.03 to 0.1 parts by weight.

For example, after acid-thickening treatment by sequential or simultaneous addition, the obtained diene-based rubber polymer latex may have an average particle diameter of 2,500 to 5,000 Å, preferably 2,500 to 4,600 Å, more preferably 3,000 to 4,500 Å. Within this range, since the particle diameter half-width increases, impact resistance may be significantly increased, and physical properties such as fluidity may be excellent.

Graft copolymer

The graft copolymer includes the diene-based rubber polymer described above. In this case, the swelling degree of the graft copolymer may be also controlled, and thus a thermoplastic resin composition including the graft copolymer may have excellent physical property balance between impact resistance and fluidity and excellent impact resistance.

For example, the graft copolymer may be a graft copolymer obtained by emulsion graft-polymerizing 5 to 80 parts (based on solids in the case of latex form) by weight of the above-described diene-based rubber polymer and 20 to 95 parts by weight of one or more selected from an aromatic vinyl compound and a vinyl cyanide compound.

In the present disclosure, for example, the aromatic vinyl compound may include one or more selected from the group consisting of styrene, α-methyl styrene, o-methyl styrene, p-methyl styrene, m-methyl styrene, ethyl styrene, isobutyl styrene, t-butyl styrene, o-bromostyrene, p-chlorostyrene, m-bromostyrene, o-chlorostyrene, p-chlorostyrene, m-chlorostyrene, vinyltoluene, vinylxylene, fluorostyrene, and vinylnaphthalene, preferably one or more selected from the group consisting of styrene and α-methyl styrene, more preferably styrene. In this case, due to appropriate fluidity, processability and mechanical properties such as impact resistance may be excellent.

In the present disclosure, for example, the vinyl cyanide compound may include one or more selected from the group consisting of acrylonitrile, methacrylonitrile, ethylacrylonitrile, and isopropylacrylonitrile, preferably acrylonitrile.

In addition, the graft copolymer may further include a comonomer copolymerizable with an aromatic vinyl compound and a vinyl cyanide compound.

For example, the comonomer may include one or more selected from a (meth)acrylic acid ester monomer, a maleimide monomer, and an amide monomer, and one or more thereof may be used.

For example, the (meth)acrylic acid ester monomer may include one or more selected from the group consisting of methyl (meth)acrylate, ethyl (meth)acrylate, propyl (meth)acrylate, butyl (meth)acrylate, 2-ethylhexyl acrylate, phenyl (meth)acrylate, 4-t-butylphenyl (meth)acrylate, (di)bromophenyl (meth)acrylate, and chlorophenyl (meth)acrylate.

For example, the maleimide monomer may be N-phenylmaleimide, N-cyclohexylmaleimide, or a mixture thereof.

For example, the amide monomer may be acrylamide, methacrylamide, or a mixture thereof.

For example, the composition ratio of the aromatic vinyl compound, the vinyl cyanide compound, and the comonomer may be 60 to 90 % by weight of the aromatic vinyl compound, 10 to 40 % by weight of the vinyl cyanide compound, and 0 to 30 % by weight of the comonomer. Within this range, swelling degree may be easily controlled.

As another example, the composition ratio may preferably be 20 to 70 % by weight of the aromatic vinyl compound, 20 to 70 % by weight of the (meth)acrylic acid ester compound, 10 to 60 % by weight of the vinyl cyanide compound, and 0 to 30 % by weight of the comonomer.

For example, the ratio of the diene-based rubber polymer and other compounds may be 5 to 80 % (based on solids in the case of latex form) by weight of the diene-based rubber polymer and 20 to 95 % by weight of other compounds, preferably 30 to 70 % by weight of the diene-based rubber polymer and 30 to 70 % by weight of other compounds. Within this range, physical property balance may be excellent.

The graft copolymer may be a graft copolymer by graft-polymerizing 5 to 80 % by weight of the diene-based rubber polymer described above, 10 to 75 % by weight of an aromatic vinyl compound, and 5 to 25 % by weight of a vinyl cyanide compound.

The swelling degree of the graft copolymer may be measured in the following manner.

First, the graft copolymer is immersed in acetone to extract insoluble matter and then completely dried. The obtained completely dried material is immersed in a toluene solvent in a dark room at room temperature for 48 hours and filtered to obtain toluene-insoluble matter. The obtained toluene-insoluble matter is completely dried, and the swelling degree is calculated by dividing the weight before complete drying by the weight after complete drying.

For example, the swelling degree may be 8 to 20, preferably 10 to 18. Within this range, impact resistance may be improved.

There is no particular limitation on the method for polymerizing the graft copolymer, and emulsion polymerization, suspension polymerization, bulk polymerization, and the like may be used. Preferably, emulsion polymerization may be used.

The graft copolymer may be used alone, but may also be mixed with other thermoplastic resins as needed. For example, other thermoplastic resins may include a styrene-acrylonitrile resin, an α-methylstyrene-acrylonitrile resin, a styrene-acrylonitrile-methyl methacrylate resin, an N-phenylmaleimide -styrene resin, an N-phenylmaleimide-styrene-acrylonitrile resin, a polycarbonate resin, a polybutylene terephthalate resin, a polyethylene terephthalate resin, a polyamide resin, a rubber-reinforced polystyrene resin, an acrylonitrile-butadiene rubber-styrene resin, an acrylonitrile-ethylene·propylene rubber-styrene resin, a methacrylate methyl-butadiene rubber-styrene resin, and/or an acrylonitrile-acryl rubber-styrene resin.

Method of preparing graft copolymer

The graft copolymer may be prepared by graft-polymerizing 40 to 70 % by weight (based on solids) of a diene-based rubber polymer, 15 to 45 % by weight of an aromatic vinyl compound, and 5 to 25 % by weight of a vinyl cyanide compound to obtain a vinyl cyanide compound-diene-based rubber-aromatic vinyl compound graft copolymer.

In the step of obtaining the graft copolymer, a vinyl cyanide compound-diene-based rubber-aromatic vinyl compound graft copolymer may be obtained preferably by graft-polymerizing 45 to 65 % by weight (based on solids in latex form) of a diene-based rubber polymer, 20 to 40 % by weight of an aromatic vinyl compound, and 10 to 20 % by weight of a vinyl cyanide compound, more preferably by graft-polymerizing 50 to 60 % by weight (based on solids in latex form) of a diene-based rubber polymer, 25 to 35 % by weight of an aromatic vinyl compound, and 12 to 17 % by weight of a vinyl cyanide compound. Within this range, both fluidity and impact resistance may be excellent.

The step of obtaining the graft copolymer may preferably include first graft polymerization step a) of continuously adding, based on 100 parts by weight in total of a diene-based rubber polymer (based on solids in latex form), an aromatic vinyl compound, and a vinyl cyanide compound, 40 to 70 parts by weight (based on solids) of the diene-based rubber polymer and 80 to 120 parts by weight of ion-exchange water; a mixture solution containing 15 to 45 parts by weight of an aromatic vinyl compound, 5 to 25 parts by weight of a vinyl cyanide compound, 10 to 30 parts by weight of an ion-exchange water, 0.01 to 2 parts by weight of an emulsifier, and 0.01 to 2 parts by weight of a molecular weight modifier; 0.01 to 2 parts by weight of a fat-soluble polymerization initiator; and 0.001 to 0.4 parts by weight of an oxidation-reduction catalyst at 65 to 75 °C for 2 to 4 hours and performing a reaction; step b) of adding 0.001 to 0.6 parts by weight of an oxidation-reduction catalyst and 0.001 to 0.5 parts by weight of a fat-soluble polymerization initiator after the first graft polymerization step; second graft polymerization step c) of increasing temperature to 75 to 85 °C after adding the oxidation-reduction catalyst and the fat-soluble polymerization initiator and performing a reaction for 50 to 70 minutes; and step d) of terminating the polymerization reaction at a polymerization conversion rate of 90 to 99 %. In this case, fluidity and impact resistance may be excellent.

For example, the emulsifier may be included in an amount of 0.01 to 2 parts by weight, preferably 0.1 to 1.5 parts by weight, more preferably 0.1 to 1 part by weight, still more preferably 0.2 to 0.7 parts by weight. Within this range, latex stability may be excellent, and coagulants may be reduced.

In step a), the emulsifier may be, for example, a polymer of an unsaturated fatty acid (multimer acid) or a metal salt thereof. In this case, latex stability may be excellent, and coagulants may be reduced.

For example, the unsaturated fatty acid may be a straight, branched, or cyclic unsaturated fatty acid having 8 to 22 carbon atoms. In this case, the coagulants of latex may be reduced, and residues in an injection mold may be reduced during injection molding.

In step a), the molecular weight modifier may be included in an amount of preferably 0.05 to 1.5 parts by weight, more preferably 0.1 to 1 part by weight, still more preferably 0.2 to 0.7 parts by weight.

In step a), the oxidation-reduction catalyst may be included in an amount of preferably 0.001 to 0.3 parts by weight, more preferably 0.005 to 0.1 parts by weight.

In step a), preferably, the reaction may be performed by continuously adding the mixture solution (diene-based rubber polymer), the fat-soluble polymerization initiator, and the oxidation-reduction catalyst at 67 to 73 °C for 2.5 to 3.5 hours. Within this range, graft efficiency may be excellent, and latex coagulants may be reduced.

In step b), the oxidation-reduction catalyst may be included in an amount of preferably 0.001 to 0.6 parts by weight, more preferably 0.01 to 0.3 parts by weight.

In step b), the molecular weight modifier may be included in an amount of preferably 0.01 to 0.3 parts by weight, more preferably 0.03 to 0.1 parts by weight.

In step c), after adding the oxidation-reduction catalyst and the fat-soluble polymerization initiator, the temperature may be increased to 77 to 82 °C and the reaction may be performed for 55 to 65 minutes. Within this range, reaction efficiency may be excellent, and coagulants may be reduced.

In step d), the polymerization reaction may be preferably terminated at a polymerization conversion rate of 93 to 97 %.

The latex of the vinyl cyanide compound-conjugated diene rubber-aromatic vinyl compound graft copolymer obtained in step d) may be subjected to conventional processes including coagulation, washing, and drying to obtain the graft copolymer in powder form.

For example, based on 100 parts by weight (based on solids) of the graft copolymer latex, the coagulation may be performed by adding an acid coagulant in an amount of 0.1 to 2 parts by weight, preferably 0.5 to 1.5 parts by weight.

For example, the acid coagulant may include one or more selected from the group consisting of sulfuric acid, hydrochloric acid, formic acid, and acetic acid, preferably sulfuric acid. In this case, coagulation efficiency may be excellent.

In the present disclosure, when an electrolyte and a coagulant are included in a solvent such as water, the weight thereof means weight excluding the solvent.

Thermoplastic resin composition

In the present disclosure, the thermoplastic resin composition may include the graft copolymer. As a specific example, the thermoplastic resin composition may include the graft copolymer and other thermoplastic resins.

Here, the other thermoplastic resin may be selected from one or more types described as other thermoplastic resins in the graft copolymer described above.

When necessary, the thermoplastic resin composition may include hindered phenol-based, sulfur-containing organic compound-based, and phosphorus-containing organic compound-based antioxidants; phenol-based and acrylate-based heat stabilizers; benzotriazole-based, benzophenone-based, and salicylate-based UV absorbers; lubricants such as higher fatty acid amides; plasticizers such as phosphate esters; halogen compounds such as polybromophenyl ether, tetrabromobisphenol-A, brominated epoxy oligomer, and brominated; phosphorus-based compounds; flame retardants such as antimony trioxide; flame retardant auxiliaries; masking agents; carbon black, titanium oxide; pigments; and/or dyes.

In addition, the thermoplastic resin composition may further include reinforcing agents or fillers, such as talc, calcium carbonate, aluminum hydroxide, glass fiber, glass flakes, glass beads, carbon fiber, and metal fiber.

The thermoplastic resin composition may be obtained by mixing the above-mentioned components using a mixing device.

For example, known mixing devices such as an extruder, a roll, a Banbury mixer, and a kneader may be used as the mixing device.

For example, when impact strength is measured using a specimen having a thickness of 1/4" according to ASTM D256, the thermoplastic resin composition may have an impact strength of 28 kgf.cm/cm or more, preferably 28 to 50 kgf.cm/cm, more preferably 30 to 50 kgf.cm/cm. In this case, a molded article having excellent mechanical strength may be provided.

For example, the thermoplastic resin composition may have a melting index of 21 g/10 min or more, preferably 22 to 30 g/10 min, more preferably 23 to 30 g/10 min as measured according to ASTM D648. In this case, excellent physical property balance between impact resistance and fluidity and excellent impact resistance may be provided.

Method of preparing thermoplastic resin composition

In the present disclosure, for example, the method of preparing a thermoplastic resin composition may include a step of preparing the vinyl cyanide compound-diene-based rubber-aromatic vinyl compound graft copolymer; and a step of adding 15 to 35 % by weight of the prepared graft copolymer and 65 to 85 % by weight of an aromatic vinyl compound-vinyl cyanide compound copolymer into an extruder, performing melt-kneading, and performing extrusion. In this case, fluidity and impact resistance may be excellent.

Preferably, the method of preparing a thermoplastic resin composition may include a step of preparing the vinyl cyanide compound-diene-based rubber-aromatic vinyl compound graft copolymer; and a step of adding 20 to 30 % by weight of the prepared graft copolymer and 70 to 80 % by weight of an aromatic vinyl compound-vinyl cyanide compound copolymer into an extruder, performing melt-kneading, and performing extrusion. In this case, fluidity and impact resistance may be excellent.

For example, the aromatic vinyl compound-vinyl cyanide compound copolymer may include 65 to 85 % by weight of an aromatic vinyl compound and 15 to 35 % by weight of a vinyl cyanide compound, preferably 70 to 80 % by weight of an aromatic vinyl compound and 20 to 30 % by weight of a vinyl cyanide compound. Within this range, due to appropriate fluidity, processability and impact resistance may be excellent.

For example, the aromatic vinyl compound-vinyl cyanide compound copolymer may have a weight average molecular weight of 120,000 to 200,000 g/mol, preferably 140,000 to 180,000 g/mol. Within this range, due to appropriate fluidity, processability and impact resistance may be excellent.

In the present disclosure, unless otherwise defined, the weight average molecular weight may be measured using gel permeation chromatography (GPC, Waters Breeze). As a specific example, the weight average molecular weight may be measured using tetrahydrofuran (THF) as an eluate through gel permeation chromatography (GPC, Waters Breeze). In this case, weight average molecular weight is obtained as a relative value to a polystyrene (PS) standard sample. As a specific measurement example, the weight average molecular weight may be measured under conditions of solvent: THF, column temperature: 40 °C, flow rate: 0.3 ml/min, sample concentration: 20 mg/ml, injection amount: 5 μl, column model: $1 \times$ PLgel 10 μm MiniMix-B (250 $\times$ 4.6 mm) + $1 \times$ PLgel 10 μm MiniMix-B (250 $\times$ 4.6 mm) + $1 \times$ PLgel 10 μm MiniMix-B Guard (50 $\times$ 4.6 mm), equipment name: Agilent 1200 series system, refractive index detector: Agilent G1362 RID, RI temperature: 35 °C, data processing: Agilent ChemStation S/W, and test method (Mn, Mw and PDI): OECD TG 118.

In the present disclosure, a polymer including a certain compound means a polymer prepared by polymerizing the compound, and a unit in the polymer is derived from the compound.

For example, the aromatic vinyl compound-vinyl cyanide compound copolymer may be prepared by solution polymerization or bulk polymerization, preferably bulk polymerization. In this case, heat resistance and fluidity may be excellent.

Solution polymerization and bulk polymerization commonly practiced in the art to which the present invention pertains may be used in the present invention without particular limitation.

For example, the melt-kneading and extrusion step may be performed at a barrel temperature of 200 to 330 °C, preferably 210 to 300 °C, more preferably 210 to 280 °C, still more preferably 210 to 280 °C, still more preferably 220 to 250 °C. In this case, throughput per unit time may be appropriate, and melt-kneading may be performed sufficient. In addition, thermal decomposition of resin components may be prevented.

For example, the melt-kneading and extrusion step may be performed at a screw rotation speed of 100 to 500 rpm, preferably 150 to 400 rpm, more preferably 100 to 350 rpm, still more preferably 200 to 310rpm, most preferably 250 to 350 rpm. In this case, due to appropriate throughput per unit time, process efficiency may be excellent, and over-cutting of glass fiber may be suppressed.

For example, the melt-kneading may be performed using a Banbury mixer, a single-screw extruder, a twinscrew extruder, or a kneader, but the present invention is not particularly limited thereto.

For example, when the melt-kneading is performed, based on 100 parts by weight of the thermoplastic resin composition (graft copolymer + other thermoplastic resins), one or more additives selected from the group consisting of colorants, heat stabilizers, light stabilizers, reinforcing agents, fillers, flame retardants, lubricants, plasticizers, antistatic agents, and processing aids may be added in an amount of 0.1 to 10 parts by weight, preferably 0.1 to 5 parts by weight.

Molded article

A molded article having excellent impact resistance may be manufactured using the diene-based rubber polymer. In this case, fluidity may be excellent. In addition, compared to the conventional ABS resin, impact resistance may be greatly improved, and productivity and appearance may be excellent.

[Examples]

Hereinafter, the present invention is specifically described with reference to examples, but the present invention is not limited thereto. In addition, "part" and "%" shown in the examples are based on weight.

**Example 1**

<Preparation of diene-based rubber polymer>

140 parts by weight of ion-exchange water, 70 parts by weight of 1,3-butadiene, 2 parts by weight of oleic acid saponifiable matter, 0.7 parts by weight of rosin acid saponifiable matter, 0.2 parts by weight of potassium chloride, 0.3 parts by weight of t-dodecyl mercaptan, 0.05 parts by weight of t-butyl hydroperoxide, 0.06 parts by weight of dextrose, 0.005 parts by weight of sodium pyrrolate, and 0.0025 parts by weight of ferrous sulfate were fed into a nitrogen-substituted polymerization reactor batchwise.

Polymerization was performed at 55 °C for 1 hour in the reactor.

Then, 30 parts by weight of 1,3-butadiene and 0.1 parts by weight of t-dodecyl mercaptan were continuously fed thereto at a constant speed while increasing the temperature to 78 °C. At this time, the continuous feeding was performed for 9 hours.

Then, when the polymerization conversion rate reached 30 to 40 %, 0.1 parts by weight of potassium persulfate and 0.15 parts by weight of a rosin acid emulsifier were fed batchwise.

Then, when the polymerization conversion rate reached 95%, the polymerization was terminated to prepare a diene-based rubber polymer latex.

At this time, the average particle diameter of the diene-based rubber polymer latex was 1,180 Å, and the particle diameter half-width was 600 Å.

<Thickening of diene-based rubber polymer latex>

0.9 parts by weight of acetic acid and 0.4 parts by weight of butadiene sulfone were added to 100 parts by weight (based on solids) of the diene-based rubber polymer latex to thicken the diene-based rubber polymer latex.

At this time, the average particle diameter of the thickened diene-based rubber polymer latex was 3,350 Å, and the particle diameter half-width was 2,100 Å.

<Preparation of graft copolymer>

A first mixture containing 15 parts by weight of acrylonitrile, 30 parts by weight of styrene, 0.6 parts by weight of rosin acid salt saponifiable matter, 0.25 parts by weight of t-dodecyl mercaptan, and 20 parts by weight of ion-exchange water was prepared.

A second mixture containing 0.12 parts by weight of t-butyl hydroperoxide, 0.054 parts by weight of dextrose, 0.004 parts by weight of sodium pyrrolate, and 0.002 parts by weight of ferrous sulfate was prepared.

55 parts by weight (based on solids) of the thickened diene-based rubber polymer latex and 100 parts by weight of ion-exchange water were fed into the nitrogen-substituted polymerization reactor batchwise.

Then, polymerization was performed while continuously feeding the first and second mixtures into the reactor at 70 °C for 3 hours at a constant speed, respectively.

Then, 0.05 parts by weight of dextrose, 0.03 parts by weight of sodium pyrrolate, 0.001 parts by weight of ferrous sulfate, and 0.05 parts by weight of t-butyl hydroperoxide were fed into the reactor, the temperature of the reactor was increased to 80 °C for 1 hour at a constant rate, and the polymerization was terminated to obtain a graft copolymer latex.

The graft copolymer latex was subjected to coagulation, maturation, washing, dehydration, and drying to obtain graft copolymer powder.

<Preparation of thermoplastic resin composition>

30 parts by weight of the graft copolymer powder and 70 parts by weight of a styrene-acrylonitrile polymer (LG Chemical Co., weight average molecular weight: 120,000 g/mol) containing 73 % by weight of styrene and 28 % by weight of acrylonitrile were mixed to prepare a thermoplastic resin composition.

**Example 2**

The same procedure was performed as in Example 1, except that, in <Thickening of diene-based rubber polymer latex> of Example 1, butadiene sulfone was added in an amount of 0.09 parts by weight instead of 0.4 parts by weight.

**Example 3**

The same procedure was performed as in Example 1, except that, in <Thickening of diene-based rubber polymer latex> of Example 1, butadiene sulfone was added in an amount of 1.0 part by weight instead of 0.4 parts by weight.

**Comparative Example 1**

<Preparation of diene-based rubber polymer>

75 parts by weight of ion-exchange water, 90 parts by weight of 1,3-butadiene, 1.6 parts by weight of oleic acid saponifiable matter, 0.1 parts by weight of t-dodecyl mercaptan, 0.15 parts by weight of t-butyl hydroperoxide, 0.06 parts by weight of dextrose, 0.005 parts by weight of sodium pyrrolate, and 0.0025 parts by weight of ferrous sulfate were fed into a nitrogen-substituted polymerization reactor batchwise.

Polymerization was performed in the reactor at 55 °C. When the polymerization conversion rate reached 30 to 40 %, 0.3 parts by weight of potassium persulfate was fed batchwise.

Then, the reactor was heated to 72 °C. When the polymerization conversion rate reached 60 to 70 %, 10 parts by weight of 1,3-butadiene was fed batchwise.

Then, when the polymerization conversion rate reached 95 %, the polymerization was terminated to prepare a diene-based polymer latex.

The average particle diameter of the obtained diene-based rubber polymer latex was 1155 Å.

<Thickening of diene-based rubber polymer latex>, <Preparation of graft copolymer> and <Preparation of thermoplastic resin composition>

Each procedure was performed as in Example 1.

**Comparative Example 2**

<u>\<Preparation of diene-based rubber polymer latex\></u>

The same procedure as in Example 1 was performed.

<u>\<Thickening of diene-based rubber polymer latex\></u>

An aqueous solution containing 1.5 parts by weight of acetic acid alone was added to 100 parts by weight (based on solids) of the prepared diene-based rubber polymer latex to thicken the diene-based rubber polymer latex. At this time, the average particle diameter of the thickened diene-based rubber polymer latex was 3,272 Å, and the particle diameter half-width was 1,400 Å.

<u>\<Preparation of graft copolymer\></u>

The same procedure as in Example 1 was performed.

<u>\<Preparation of thermoplastic resin composition\></u>

The same procedure as in Example 1 was performed.

**\<Experimental Example 1\>**

The physical properties of the diene-based rubber polymers of Examples 1 to 3 and Comparative Examples 1 and 2 were measured as follows.

<u>1) Microstructure:</u> The ratio (%) of cis-1,4-bond, trans-1,4-bond, and 1,2-bond of the thickened diene-based rubber polymer latex was analyzed using 13C 1D Normal NMR, and the results are shown in Table 1 below.
<u>2) Particle diameter distribution:</u> For the thickened diene-based rubber polymer latex, capillary hydrodynamic fractionation (CHDF) particle diameter distribution was measured using MATEC CHDF 4000 equipment (Mass Applied Science), and the results are shown in Table 1 below.
<u>3) Weight ratio of first and second diene-based rubber polymers:</u> The weight ratio was obtained using the counting analysis value by particle diameter for the thickened diene-based rubber polymer latex with TEM equipment (JEM-1400, Jeol), and the results are shown in Table 1 below.
<u>4) Particle circularity measurement:</u> For the thickened diene-based rubber polymer latex, the ratio of the major axis length to minor axis length of a particle was measured, and the circularity of the particle was calculated based on the average value thereof.

Specifically, after each latex was analyzed using TEM equipment (JEM-1400, Jeol), the major axis length and minor axis length of each of 50 particles were measured, and the particle circularity was calculated using Equation 1 below, and the results are shown in Table 1 below.

[Equation 1]

$$\text{Circularity} = \frac{1}{50} \sum_{i=1}^{50} D_i$$

In Equation 1, $D_i$ represents the ratio of major axis length to minor axis length [Major axis length/Minor axis length] of an i-th particle.
Specifically, each latex was analyzed by the TEM equipment (JEM-1400, Jeol, 40K) and at least 50 to 100 particles were identified. In the images where 50 particles were identified, the major and minor axis lengths of each particle were measured and the circularity was calculated. For reference, more than 200 particles were identified in TEM equipment (JEM-1400, Jeol, 25K), less than 50 particles were identified in TEM equipment (JEM-1400, Jeol, 50K), and less than 10 particles were identified in TEM equipment (JEM-1400, Jeol, 100K).
<u>5) Average particle diameter (Å):</u> 1 g of the thickened diene-based rubber polymer latex was mixed with 100 g of distilled water, and the intensity value was measured in Gaussian mode by dynamic light scattering using Nicomp 380 equipment (manufacturer: PSS), and the results are shown in Table 1 below.

6) Swelling degree measurement: The thickened diene-based rubber polymer latex was dropped into a mixture obtained by mixing an aqueous ethanol solution having a volume ratio of 1:1 and 1% by weight of sulfuric acid based on the aqueous ethanol solution to obtain solids, and the solids was completely dried.

About 1 g of the dried product obtained was immersed in 100 ml of toluene at room temperature for 48 hours in a darkroom and then was filtered through a 100-mesh wire mesh to obtain toluene-insoluble matter. The toluene-insoluble matter was completely dried, and the DP swelling degree was calculated by dividing the weight before complete drying by the weight after complete drying, and the results are shown in Table 1 below.

In the present disclosure, complete dryness means the weight when there is no further weight change under vacuum drying conditions.

7) Total solids content (TSC): 1.5 g of the thickened diene-based rubber polymer latex was dried in a 150 °C hot air dryer for 15 minutes, the weight thereof was measured, total solids content (TSC) was calculated by Equation 2 below, and the results are shown in Table 1 below.

Total solids content (TSC, %) = [Weight after drying/Weight before drying] × 100          [Equation 2]

**<Experimental Example 2>**

The physical properties of the graft copolymer powders of Examples 1 to 3 and Comparative Examples 1 and 2 were measured as follows.

1) Swelling degree: 2 g of the graft copolymer powder was immersed in 300 ml of acetone and stirred for 24 hours. Insoluble matter was extracted from this solution.

The insoluble matter was dried, then soaked in an acetone solvent in a dark room at room temperature for 48 hours and filtered to obtain toluene-insoluble matter.

The obtained toluene-insoluble matter was completely dried, and the swelling degree was calculated from the weights before and after complete drying, and the results are shown in Table 1 below.

**<Experimental Example 3>**

100 parts by weight of the thermoplastic resin compositions of Examples 1 to 3 and Comparative Examples 1 and 2 were mixed with 1 part by weight of a lubricant and 0.1 parts by weight of a heat stabilizer, and kneaded and extruded at 210 °C and 160 rpm to obtain pellets.

The obtained pellets were injected using an injection molding machine (injection temperature: 230 °C, injection pressure: 80 bar, Engel ES 200/45 HL-Pro Series), followed by drying at 25 °C and a relative humidity of 50±5 °C for 12 hours to manufacture specimens.

The physical properties of the specimens were measured using the methods described below.

1) Impact strength: For the obtained specimens, the Izod impact strength (unit: kgf·cm/cm) was measured at a thickness of 1/4" using a Tinius Olsen (product name: Model Impact 104, manufacturer: Tinius Olsen test machine company) according to ASTM D256, and the results are shown in Table 1 below.

2) Melting index: For the obtained specimens, the melting index (unit: g/10 min) was measured at 220 °C under a load of 10 kg according to ASTM 648, and the results are shown in Table 1 below.

[Table 1]

| Classification | Physical properties | Example 1 | Example 2 | Example 3 | Comparative Example 1 | Comparative Example 2 |
|---|---|---|---|---|---|---|
| Diene-based rubber polymer | 1.4-BD(Cis) (%) | 23 | 23 | 23 | 23 | 23 |
| | 1,4-BD(Trans) (%) | 60 | 60 | 60 | 60 | 60 |
| | 1,2-BD(Vinyl) (%) | 17 | 17 | 17 | 17 | 17 |

(continued)

| Classification | Physical properties | Example 1 | Example 2 | Example 3 | Comparative Example 1 | Comparative Example 2 |
|---|---|---|---|---|---|---|
| | Swelling degree of diene-based rubber polymer | 8.0 | 12.0 | 17.5 | 4.0 | 21.0 |
| | Average particle diameter (Å) of diene-based rubber polymer before acid thickening | 1,180 | 1,180 | 1,180 | 770 | 1,180 |
| | Average particle diameter (Å) of diene-based rubber polymer after acid thickening | 3,350 | 2,950 | 4,772 | 1, 900 | 2,450 |
| | Particle circularity of diene-based rubber polymer after acid thickening | 1.26 | 1.05 | 1.48 | 1.01 | 1.02 |
| | Total solids content (TSC, %) | 38.40 | 45 | 55.20 | 38.8 | 38.5 |
| Graft copolymer | Swelling degree | 12 | 13 | 17 | 4 | 8 |
| Thermoplastic resin composition | 1/4" Impact strength (kgf.cm/cm ) | 41 | 44 | 48 | 8 | 19 |
| | Melting index (g/10 min) | 25 | 24 | 25 | 14 | 14 |

As shown in Table 1, in the case of the thermoplastic resin compositions (Examples 1 to 3) including the diene-based rubber polymer according to the present invention, impact strength and melting index were excellent, and the physical property balance between impact resistance and fluidity was excellent.

In particular, in the case of the diene-based rubber polymers (Examples 1 to 3), in which the circularity of the latex particles follows the present invention, compared to Comparative Examples 1 and 2 outside the range of the present invention, both impact strength and melting index were significantly improved.

In addition, in the case of Comparative Examples 1 and 2 in which the acid thickening aid was not used when acid-thickening treatment of the diene-based rubber polymer was performed, compared to Example 1, both impact strength and melting index were significantly improved.

In addition, particle diameter distributions measured before and after acid thickening in Example 1 and Comparative Example 1 are shown in FIGS.1 and 2 below. FIG. 1 below is a drawing showing the molecular weight distribution of a diene-based rubber polymer according to Example 1 before acid-thickening treatment (solid line) and the molecular weight distribution of a diene-based rubber polymer according to Example 1 after acid-thickening treatment (dotted line), and FIG. 2 below is a drawing showing the molecular weight distribution of a diene-based rubber polymer according to Comparative Example 1 before acid-thickening treatment (solid line) and the molecular weight distribution of a diene-based rubber polymer according to Comparative Example 1 after acid-thickening treatment (dotted line).

As shown in FIG. 1 below, the average particle diameter (1,180 Å) of the rubber polymer before acid thickening of Example 1 was changed to the average particle diameter (3,350 Å) after acid thickening. Thus, a particle distribution tendency with a large fluctuation range (mixture distribution, monodisperse) was observed.

As shown in FIG. 2, the average particle diameter (770 Å) of the rubber polymer before acid thickening of Comparative Example 1 was changed to the average particle diameter (1,900 Å) after acid thickening. Thus, a particle distribution tendency with a relatively small fluctuation range (mixture distribution, monodisperse) was observed.

### <Experimental Example 4>

5 g of each diene-based rubber polymer latex obtained in Example 1 and Comparative Example 1 was placed in a crucible and burned in a furnace at 600 °C for 3 hours to obtain ash.

By analyzing the obtained ash using the inorganic analysis (EDS) method, the contents of Na, Mg, Si, P, S, and K and the total inorganic content were measured, and the results are shown in Table 2 below.

[Table 2]

| Classification | Na (wt%/at%) | Mg (wt%/at% ) | Si (wt%/at%) | P (wt%/at%) | S (wt%/at%) | K (wt%/at%) | Sum (wt%/at%) |
|---|---|---|---|---|---|---|---|
| Example 1 | 2.21/2 .86 | 35.72/43 .65 | 5.47/5 .78 | 7.32/7. 02 | 19.41/17 .98 | 29.88/2 2.7 | 100/10 0 |
| Comparative Example 1 | 1.51/1 .9 | 40.67/48 .32 | 7.3/7. 51 | 10.11/9 .42 | 18.48/16 .65 | 21.83/1 6.2 | 100/10 0 |

As shown in Table 2, in Example 1 according to the present invention, it was confirmed that the Na, S, and K contents were higher than those of Comparative Example 1, resulting in superior impact resistance and fluidity.

Additional experiments on sequential injection were performed below.

**Example 4**

<Preparation of diene-based rubber polymer>

90 parts by weight of ion-exchange water, 75 parts by weight of 1,3-butadiene, 1 part by weight of oleic acid saponifiable matter, 0.5 parts by weight of rosin acid salt saponifiable matter, 0.4 parts by weight of butadiene sulfone, 0.15 parts by weight of t-dodecyl mercaptan, 0.15 parts by weight of t-butyl hydroperoxide, 0.06 parts by weight of dextrose, 0.005 parts by weight of sodium pyrrolate, and 0.0025 parts by weight of ferrous sulfate were fed into a nitrogen-substituted polymerization reactor batchwise.

Polymerization was performed at 55 °C for 1 hour in the reactor.

Then, polymerization was performed by continuously feeding 25 parts by weight of 1,3-butadiene and 0.3 parts by weight of t-dodecyl mercaptan thereto at a constant speed while increasing temperature to 78 °C. At this time, the continuous feeding was performed for 14 hours.

Then, when the polymerization conversion rate reached 30 to 40 %, 0.1 parts by weight of potassium persulfate and 0.15 parts by weight of a rosin acid emulsifier were fed batchwise.

Then, when the polymerization conversion rate reached 95%, the polymerization was terminated to prepare a diene-based rubber polymer latex.

At this time, the average particle diameter of the diene-based rubber polymer latex was 2,680 Å, and the particle diameter half-width was 1,400 Å.

<Thickening of diene-based rubber polymer latex>

0.6 parts by weight of acetic acid was added to 100 parts by weight (based on solids) of the diene-based rubber polymer latex to thicken the diene-based rubber polymer latex.

At this time, the average particle diameter of the thickened diene-based rubber polymer latex was 3,350 Å, and the particle diameter half-width was 2,150 Å.

<Preparation of graft copolymer>

A first mixture containing 15 parts by weight of acrylonitrile, 30 parts by weight of styrene, 0.6 parts by weight of rosin acid saponifiable matter, 0.35 parts by weight of t-dodecyl mercaptan, and 20 parts by weight of ion-exchange water was prepared.

A second mixture containing 0.12 parts by weight of t-butyl hydroperoxide, 0.054 parts by weight of dextrose, 0.004 parts by weight of sodium pyrrolate, and 0.002 parts by weight of ferrous sulfate was prepared.

55 parts by weight (based on solids) of the thickened diene-based rubber polymer latex and 100 parts by weight of ion-exchange water were fed into a nitrogen-substituted polymerization reactor batchwise.

Then, polymerization was performed while continuously feeding the first and second mixtures into the reactor at 70 °C for 3 hours at a constant speed, respectively.

Then, 0.05 parts by weight of dextrose, 0.03 parts by weight of sodium pyrrolate, 0.001 parts by weight of ferrous sulfate, and 0.05 parts by weight of t-butyl hydroperoxide were fed into the reactor, the temperature of the reactor was increased to 80 °C for 1 hour at a constant rate, and the polymerization was terminated to obtain a graft copolymer latex.

The graft copolymer latex was subjected to coagulation, maturation, washing, dehydration, and drying to obtain graft copolymer powder.

<Preparation of thermoplastic resin composition>

30 parts by weight of the graft copolymer powder and 70 parts by weight of a styrene-acrylonitrile polymer (LG Chemical Co., weight average molecular weight: 120,000 g/mol) containing 73 % by weight of styrene and 28 % by weight of acrylonitrile were mixed to prepare a thermoplastic resin composition.

## Example 5

The same procedure as in Example 4 was performed, except that, in <Thickening of diene-based rubber polymer latex> of Example 4, butadiene sulfone was added in an amount of 0.09 parts by weight instead of 0.4 parts by weight.

## Example 6

The same procedure as in Example 4 was performed, except that, in <Thickening of diene-based rubber polymer latex> of Example 4, butadiene sulfone was added in an amount of 1.0 part by weight instead of 0.4 parts by weight.

## Comparative Example 4

<Preparation of diene-based rubber polymer>

75 parts by weight of ion-exchange water, 90 parts by weight of 1,3-butadiene, 1.6 parts by weight of oleic acid saponifiable matter, 0.4 parts by weight of butadiene sulfone, 0.1 parts by weight of t-dodecyl mercaptan, 0.15 parts by weight of t-butyl hydroperoxide, 0.06 parts by weight of dextrose, 0.005 parts by weight of sodium pyrrolate, and 0.0025 parts by weight of ferrous sulfate were fed into a nitrogen-substituted polymerization reactor batchwise.

Polymerization was performed in the reactor at 55 °C. When the polymerization conversion rate reached 30 to 40 %, 0.3 parts by weight of potassium persulfate was fed batchwise.

Then, the reactor was heated to 72 °C. When the polymerization conversion rate reached 60 to 70 %, 10 parts by weight of 1,3-butadiene was fed batchwise.

Then, when the polymerization conversion rate reached 95 %, the polymerization was terminated to prepare a diene-based polymer latex.

<Thickening of diene-based rubber polymer latex>, <Preparation of graft copolymer>, and <Preparation of thermoplastic resin composition>

Each procedure was performed in the same manner as Example 4.

## Comparative Example 5

<Preparation of diene-based rubber polymer latex>

The same procedure as in Example 4 was performed.

<Thickening of diene-based rubber polymer latex>

An aqueous solution containing 0.9 parts by weight of acetic acid alone was added to 100 parts by weight (based on solids) of the prepared diene-based rubber polymer latex to thicken the diene-based rubber polymer latex.

<Preparation of graft copolymer>

The same procedure as in Example 4 was performed.

<Preparation of thermoplastic resin composition>

The same procedure as in Example 4 was performed.

**<Experimental Example 5>**

The physical properties of the specimens obtained from the diene-based rubber polymers, graft copolymers, and thermoplastic resin compositions of Examples 4 to 6 and Comparative Examples 4 and 5 were measured according to the above-described methods, and the results are shown in Table 3 below.

[Table 3]

| Classification | Physical properties | Example 4 | Example 5 | Example 6 | Comparative Example 4 | Comparative Example 5 |
|---|---|---|---|---|---|---|
| Diene-based rubber polymer | 1.4-BD (Cis) (%) | 23 | 23 | 23 | 23 | 23 |
| | 1,4-BD(Trans) (%) | 60 | 60 | 60 | 60 | 60 |
| | 1,2-BD(Vinyl) (%) | 17 | 17 | 17 | 17 | 17 |
| | Swelling degree of rubber polymer | 8.0 | 11.0 | 17.5 | 4.0 | 4.0 |
| | Average particle diameter (Å) of rubber polymer before acid thickening | 2,180 | 1,250 | 2,750 | 770 | 850 |
| | Particle diameter distribution (Å) of rubber polymer before acid thickening | 600 | 600 | 600 | 400 | 600 |
| | Average particle diameter (Å) of rubber polymer after acid thickening | 3,350 | 3,340 | 3,272 | 1,900 | 1,450 |
| | Mixed distribution particle diameter distribution (Å) after acid thickening | 2,100 | 1, 950 | 1,400 | 1,100 | 1,200 |
| | Particle circularity of diene-based rubber polymer after acid thickening | 1.31 | 1.06 | 1.44 | 1.01 | 1.01 |
| | Total solids content (TSC, %) | 38.40 | 44.50 | 55.20 | 38.8 | 38.20 |
| | Coagulant content (wt %) | 0.10 | 0.10 | 0.05 | 0.34 | 0.76 |
| Graft copolymer | Swelling degree | 11 | 13 | 16 | 4 | 5 |
| Thermoplastic resin composition | 1/4" Impact strength (kgf.cm/cm) | 41 | 44 | 48 | 8 | 8 |
| | Melting index (g/10 min) | 26 | 24 | 25 | 14 | 9 |

As shown in Table 3, in the case of the thermoplastic resin compositions (Examples 4 to 6) including the diene-based rubber polymer according to the present invention, impact strength and melting index were excellent, the physical property balance between impact resistance and fluidity was excellent, and productivity was increased.

In particular, in the case of the diene-based rubber polymers (Examples 4 to 6) having the circularity according to the present invention, compared to Comparative Examples 4 and 5 outside the range of the present invention, both impact strength and melting index were significantly improved.

In addition, in the case of Comparative Example 5 in which the acid thickening agent was not used when thickening the diene-based rubber polymer, compared to Example 4, impact strength and melting index were significantly reduced.

In addition, the particle diameter distributions measured before and after acid thickening of Example 4 and Comparative Example 4 are shown in FIGS. 3 and 4 below.

FIG. 3 below is a drawing showing the molecular weight distribution of a diene-based rubber polymer according to Example 4 before acid-thickening treatment (solid line) and the molecular weight distribution of a diene-based rubber polymer according to Example 4 after acid-thickening treatment (dotted line).

As shown in FIG. 3 below, the maximum value (2,180 Å) of the rubber polymer particle diameter before acid thickening of Example 4 was changed to the maximum value (3,320 Å) of the particle diameter after acid thickening, which exhibited particle distribution tendency with large fluctuations.

In addition, as shown in FIG. 4 below, the maximum value (770 Å) of the rubber polymer particle diameter before acid thickening of Comparative Example 4 was changed to the maximum value (1,900 Å) of the particle diameter after acid thickening, which exhibited particle distribution tendency with small fluctuations.

In conclusion, the diene-based rubber polymer according to the present invention has a monodisperse particle diameter distribution. By controlling microstructure, swelling degree, average particle diameter, and circularity, excellent physical property balance between impact resistance and fluidity may be provided. Accordingly the diene-based rubber polymer may be applied to products requiring both impact resistance and processability.

**Claims**

1. A diene-based rubber polymer comprising a microstructure containing 20 to 35 % of a cis-1,4-bond, 55 to 65 % of a trans-1,4-bond, and a remaining amount of a 1, 2-bond,

   having a particle diameter distribution section of 1,200 Å to 3,000 Å,
   having an average particle diameter of 2,500 to 5,000 Å as measured for an acid-thickened product of diene-based rubber polymer latex, and
   having a circularity of 1.03 to 1.5 as calculated by Equation 1 below.

   [Equation 1]

   $$\text{Circularity} = \frac{1}{50} \sum_{i=1}^{50} D_i \, ,$$

   wherein $D_i$ is a ratio [Major axis length/Minor axis length] of a length of a major axis to a length of a minor axis in an i-th particle in latex.

2. The diene-based rubber polymer according to claim 1, wherein the diene-based rubber polymer has an average particle diameter of 800 to 3,000 Å as measured for latex of the diene-based rubber polymer.

3. The diene-based rubber polymer according to claim 1, wherein the diene-based rubber polymer has a swelling degree of 5 to 20.

4. A diene-based rubber polymer comprising a microstructure containing 20 to 35 % of a cis-1,4-bond, 55 to 65 % of a trans-1,4-bond, and a remaining amount of a 1, 2-bond,

   having a particle diameter distribution section of 1,200 Å to 3,000 Å,
   having an average particle diameter of 2,500 to 5,000 Å as measured for an acid-thickened product of diene-based rubber polymer latex, and having an average particle diameter of 800 to 3,000 Å as measured for latex of the diene-based rubber polymer.

5. A method of preparing a diene-based rubber polymer, comprising thickening a diene-based rubber polymer latex using an acid thickening agent and an acid thickening aid to obtain a diene-based rubber polymer,
   wherein the acid thickening agent and the acid thickening aid are added simultaneously or sequentially.

6. The method according to claim 5, wherein, based on 100 parts by weight (based on solids) of the diene-based rubber polymer latex, 0.01 to 1.5 parts by weight of one or more selected from the group consisting of acetic acid, acetic anhydride, dicarboxylic acid, formic acid, citric acid, phosphoric acid, dihydrophosphoric acid, hydrophosphoric acid, sulfuric acid, and hydrosulfuric acid is used as the acid thickening agent.

7. The method according to claim 5, wherein, based on 100 parts by weight (based on solids) of the diene-based rubber polymer latex, 0.1 to 5 parts by weight of a sulfur compound is used as the acid thickening aid.

8. The method according to claim 5, wherein the acid thickening agent and the acid thickening aid are comprised in a weight ratio of 1:0.1 to 1:10.

9. The method according to claim 5, wherein the diene-based rubber polymer latex is prepared by emulsion-polymerizing a conjugated diene compound.

10. A graft copolymer comprising the diene-based rubber polymer according to claim 1 or 4.

11. The graft copolymer according to claim 10, wherein the diene-based rubber polymer is comprised in the graft copolymer in an amount of 3 to 80 % by weight.

12. The graft copolymer according to claim 10, wherein the graft copolymer has a swelling degree of 8 to 20.

13. A thermoplastic resin composition comprising the graft copolymer according to claim 10.

14. A molded article comprising the thermoplastic resin composition according to claim 13.

15. The molded article according to claim 14, wherein the molded article is a product requiring impact resistance.

[FIG. 1]

[FIG. 2]

[FIG. 3]

[FIG. 4]

## INTERNATIONAL SEARCH REPORT

| International application No. |
| --- |
| **PCT/KR2024/017303** |

| A. | CLASSIFICATION OF SUBJECT MATTER |
| --- | --- |

**C08F 36/04**(2006.01)i; **C08F 136/06**(2006.01)i; **C08F 2/22**(2006.01)i; **C08F 6/18**(2006.01)i; **C08F 2/38**(2006.01)i

According to International Patent Classification (IPC) or to both national classification and IPC

| B. | FIELDS SEARCHED |
| --- | --- |

Minimum documentation searched (classification system followed by classification symbols)

C08F 36/04(2006.01); C08C 1/065(2006.01); C08F 2/22(2006.01); C08F 2/24(2006.01); C08F 279/00(2006.01); C08F 279/04(2006.01); C08F 291/02(2006.01); C08F 36/06(2006.01); C08L 51/04(2006.01); C08L 69/00(2006.01); C08L 9/10(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 디엔계 고무질 중합체 라텍스(diene rubber polymer latex), 산비대화제(acid enlarging agent), 원형도(circularity), 팽윤도(swelling degree), 입경(particle size), 열가소성(thermoplasticity), 그래프트 중합체(graft polymer)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | KR 10-2022-0047156 A (LG CHEM, LTD.) 15 April 2022 (2022-04-15)<br>See claims 1-15; and paragraphs [0097], [0178] and [0179]. | 1-15 |
| Y | KR 10-2023-0111589 A (LG CHEM, LTD.) 25 July 2023 (2023-07-25)<br>See claim 10. | 1-4,10-15 |
| Y | JP 2002-128840 A (MITSUBISHI RAYON CO., LTD.) 09 May 2002 (2002-05-09)<br>See paragraphs [0018]-[0037]. | 1-15 |
| A | JP 2014-025082 A (TECHNO POLYMER CO., LTD.) 06 February 2014 (2014-02-06)<br>See claims 1-13. | 1-15 |
| A | KR 10-2002-0039854 A (LG CHEM INVESTMENT, LTD.) 30 May 2002 (2002-05-30)<br>See claims 1-12. | 1-15 |

| ☐ Further documents are listed in the continuation of Box C. | ☑ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **12 February 2025** | **12 February 2025** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/017303**

| Patent document cited in search report | | | Publication date (day/month/year) | Patent family member(s) | | | Publication date (day/month/year) |
|---|---|---|---|---|---|---|---|
| KR | 10-2022-0047156 | A | 15 April 2022 | CN | 114641513 | A | 17 June 2022 |
| | | | | CN | 114641513 | B | 23 April 2024 |
| | | | | EP | 4008734 | A1 | 08 June 2022 |
| | | | | KR | 10-2022-0046848 | A | 15 April 2022 |
| | | | | KR | 10-2615706 | B1 | 20 December 2023 |
| | | | | US | 2022-0411558 | A1 | 29 December 2022 |
| | | | | WO | 2022-075578 | A1 | 14 April 2022 |
| KR | 10-2023-0111589 | A | 25 July 2023 | CN | 116981706 | A | 31 October 2023 |
| | | | | EP | 4286430 | A1 | 06 December 2023 |
| | | | | US | 2024-0309122 | A1 | 19 September 2024 |
| | | | | WO | 2023-140586 | A1 | 27 July 2023 |
| JP | 2002-128840 | A | 09 May 2002 | None | | | |
| JP | 2014-025082 | A | 06 February 2014 | JP | 5490958 | B2 | 14 May 2014 |
| KR | 10-2002-0039854 | A | 30 May 2002 | KR | 10-0431443 | B1 | 13 May 2004 |

Form PCT/ISA/210 (patent family annex) (July 2022)

**REFERENCES CITED IN THE DESCRIPTION**

**Patent documents cited in the description**

- KR 1020230151819
- KR 1020230151818
- KR 1020240155118
- KR 1020240155119
- JP 11130825 A